# EUROPEAN PATENT APPLICATION

(11) **EP 4 553 335 A1**
(43) Date of publication of application: **14.05.2025**
(21) Application number: 23851571.2
(22) Date of filing: 21.07.2023
(51) Int. Cl.: F16D 65/18

(54) **SIZE-REDUCED BRAKE CALIPER**

(30) Priority: 08.08.2022 CN 202210943270
(71) Applicant: Bethel Automotive Safety Systems Co., Ltd., Wuhu, Anhui 241009 (CN)
(72) Inventor: GUO, Fengliang, Wuhu, Anhui 241009 (CN); ZHU, Yuancheng, Wuhu, Anhui 241009 (CN); YAN, Guanghui, Wuhu, Anhui 241009 (CN); LI, Yundong, Wuhu, Anhui 241009 (CN)
(74) Representative: Canzler & Bergmeier Patentanwälte Partnerschaft mbB
(86) International application number: PCT/CN2023/108610
(87) International publication number: WO 2024/032349

(57) **Abstract**

A size-reduced brake caliper, comprising: a brake caliper body (2), a motion conversion mechanism (5), and an anti-rotation mechanism (6). The motion conversion mechanism (5) comprises a rotation member (3) and a translation member (4). The anti-rotation mechanism (6) comprises an anti-rotation boss (4a) provided on the outer wall of the translation member (4), and an anti-rotation recess (2b) provided in the inner wall of a cylinder hole (2a) of the brake caliper body (2). The anti-rotation recess (2b) matches the anti-rotation boss (4a) so as to limit the rotation of the translation member (4). By optimizing the anti-rotation structure of the motion conversion mechanism, the axial size of the brake caliper is reduced, thus facilitating machining.

## Description

### FIELD OF TECHNOLOGY

The present disclosure belongs to the technical field of braking systems, and specifically relates to a volume-reduced brake caliper.

### BACKGROUND

Traditional hydraulic calipers must have a piston structure to convert hydraulic pressure into thrust. For electronically controlled braking dry calipers, the hydraulic braking mode is eliminated and the brake pads can be pushed directly by the motion conversion mechanism, which is completely electrically driven.

The electrically controlled braking caliper in the prior art still retains the piston structure. Patent CN107076237A discloses an electromechanical brake caliper actuator. The function of the piston of the electromechanical brake caliper actuator is as follows:
1. Anti-rotation function: the anti-rotation structure of the electromechanical brake caliper actuator involves making a long groove on the outer wall of the piston, drilling a hole in the lateral wall of the brake caliper body, installing the screw, the screw extends through the brake caliper body into the groove on the outer wall of the piston, to limit the rotation of the piston as well as the nut.
2. Sealing function: the piston fits with the inner wall of the cylinder bore of the brake caliper body, and a ring and a dust cover are installed between the piston and the cylinder bore for sealing.

The problem with the above-mentioned electromechanical caliper actuator is that the anti-rotation structure and the sealing structure result in a large axial dimension of the piston. The length of the anti-rotation groove provided in the outer wall of the piston needs to be greater than the sum of the wear and tear of the parts including the brake disc and brake pad during the entire life cycle, i.e., it needs to be greater than the total stroke of the piston during the life cycle, otherwise it will lead to the failure of the anti-rotation function. Secondly, the grooved section of the piston must not contact the ring position in the cylinder bore during the total stroke of the piston, or seal failure will result. As a result, the length of the piston must be at least twice as long as the total stroke length, resulting in a large axial dimension of the piston and a large axial dimension of the brake caliper assembly, making it more difficult to arrange on the entire vehicle.

Patent CN113906233A discloses another anti-rotation scheme, which utilizes a screw mounted on the piston to fit with a groove in the inner wall of the cylinder bore for anti-rotation, and the sealing structure is kept the same as that of the traditional caliper, and the length of the piston can be shortened. However, the body of the caliper in the scheme has to be designed in a split body type to allow the process of the anti-rotation groove in the cylinder bore, and connect two portions of the caliper body with the screw, which results in a complex structure and increased volume and weight.

In summary, the following problems exist with the prior art brake calipers:
(1) The need to ensure both anti-rotation and sealing strokes results in a large axial size of the piston, an increase in the overall length of the brake caliper, and difficulties in spatial arrangement.
(2) To reduce the axial dimension, it is necessary to design the brake caliper body into a split type, which is complicated in structure and difficult to process.

### SUMMARY

The present disclosure provides a volume-reduced brake caliper, which can reduce the axial dimensions of the brake caliper while facilitating processing.

The volume-reduced brake caliper of the present disclosure includes a brake caliper body, a motion conversion mechanism, and an anti-rotation mechanism. The motion conversion mechanism includes a rotating part and a translating part, the anti-rotation mechanism includes an anti-rotation boss set on the outer wall of the translating part and an anti-rotation groove set on the inner wall of the cylinder bore of the brake caliper body, and the anti-rotation groove fits the anti-rotation boss to limit the rotation of the translating part.

One end of the translating part is provided with an opening for the rotating part to pass through, and the anti-rotation boss is provided on the outer wall of the translating part at a position close to the opening.

The translating part is cup-shaped, one end of the translating part is open and the other end is closed, and the cross-section of the translating part is U-shaped.

The cup-shaped bottom and the cup-shaped outer wall of the rotating part and/or translating part are made in one piece.

The cup-shaped bottom and the cup-shaped outer wall of the rotating part and/or translating part are joined together by welding, riveting or threaded connection.

The cylinder bore is provided with a first annular groove and a ring is provided in the first annular groove.

At least one ring is provided.

The anti-rotation groove is a circular arc-shaped groove, the maximum distance of the anti-rotation groove from the axis of the cylinder bore is less than the minimum radius of the first annular groove.

The volume-reduced brake caliper further includes a dust cover, which is disposed between the brake caliper body and the translating part.

The rotating part is provided with a limiting mechanism between the rotating part and the translating part, the limiting mechanism is a pair of mutually matched limiting bosses.

The brake caliper of the present disclosure can reduce the axial dimension of the caliper and facilitate processing by optimizing the anti-rotation structure of the motion conversion mechanism. Moreover, sealing and anti-rotation functions are realized between the motion conversion mechanism and the brake caliper body, simplifying the transmission structure and reducing the number of parts.

### BRIEF DESCRIPTION OF THE DRAWINGS

FIG. 1 is a schematic diagram of a volume-reduced brake caliper of the present disclosure.
FIG. 2 is a schematic diagram of a translating part.
FIG. 3 is a schematic diagram of the structure of a brake caliper body.

Reference Numerals: 1, Actuator; 2, Brake caliper body; 2a, Cylinder bore; 2b, Anti-rotation groove; 2c, First annular groove; 3, Rotating part; 3a, First limit boss; 4, Translating part; 4a, Anti-rotation boss; 4b, Second limit boss; 4c, Second annular groove; 5, Motion conversion mechanism; 6, Anti-rotation mechanism; 7, Ring; 8, Dust cover; 9, Bearing; 10, Inner brake pad; 11, Brake disc; 12, Outer brake pad.

### DETAILED DESCRIPTION

The following specific embodiments of the present disclosure are described in further detail by a description of the embodiments in the light of the accompanying drawings, to assist those skilled in the art to have a more complete, accurate and in-depth understanding of the technical solution of the present disclosure and to assist in its implementation.

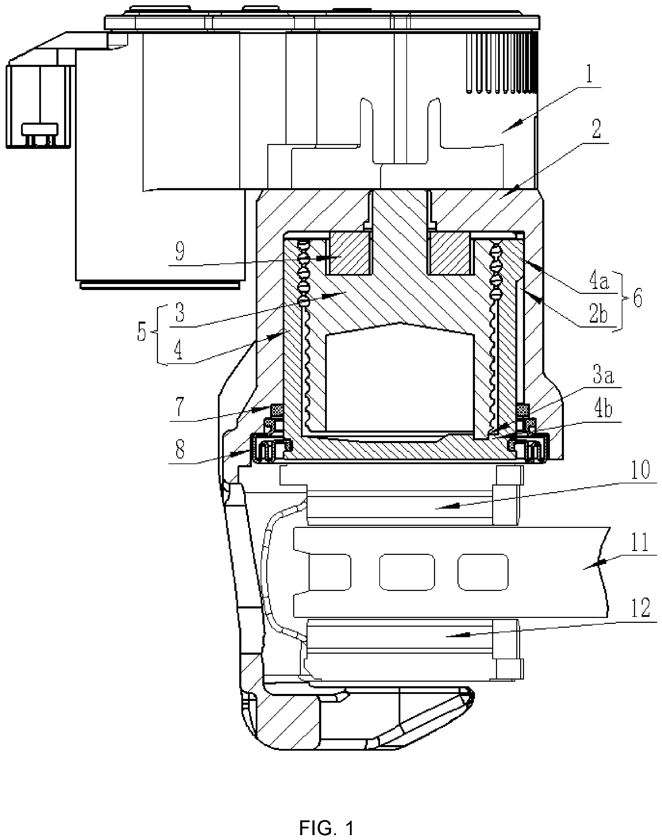

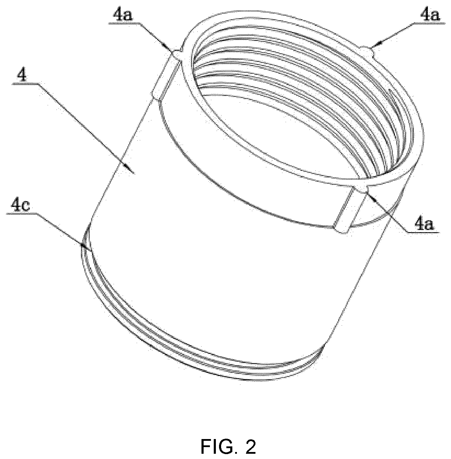

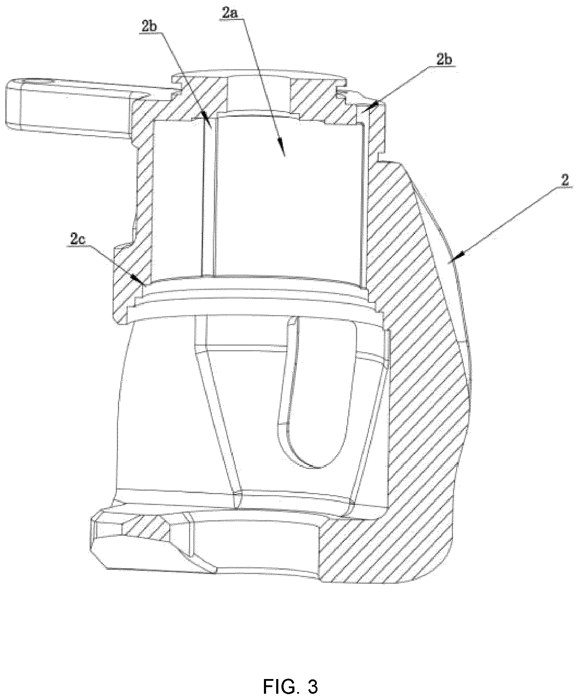

As shown in FIGs. 1 to 3, the present disclosure provides a volume-reduced brake caliper including an actuator 1, a brake caliper body 2, a motion conversion mechanism 5, and an anti-rotation mechanism 6. The motion conversion mechanism 5 and the anti-rotation mechanism 6 are disposed in a cylinder bore 2a of the brake caliper body 2. The motion conversion mechanism 5 includes a rotating part 3 and a translating part 4. The output shaft of the actuator 1 is connected to the rotating part 3 of the motion conversion mechanism 5. The motion conversion mechanism 5 converts the torque and rotational speed of the rotating part 3 into the linear motion and thrust of the translating part 4, which directly pushes the brake pads to clamp the brake disc 11. The anti-rotation mechanism 6 includes an anti-rotation boss 4a provided on an outer wall of the translating part 4 and an anti-rotation groove 2b provided on an inner wall of the cylinder bore 2a of the brake caliper body 2. The anti-rotation groove 2b fits the anti-rotation boss 4a to limit the rotation of the translating part 4.

The volume-reduced brake caliper of the present disclosure can simplify the transmission structure and reduce the number of parts.

In the present disclosure, the motion conversion mechanism 5 uses a ball screw assembly. Specifically, the inner wall of the translating part 4 is provided with a threaded raceway for balls to be embedded, and the outer wall of the rotating part 3 is provided with a threaded raceway for the balls to be embedded. The translating part 4 and the rotating part 3 form the ball screw assembly, and the translating part 4 has the functions of a piston and a nut at the same time.

A section of anti-rotation boss 4a is provided on the outer wall surface of the translating part 4, and the anti-rotation boss 4a fits the anti-rotation groove 2b provided on the inner wall of the cylinder bore 2a of the brake caliper body 2 to form the anti-rotation mechanism 6. A ring 7 and a dust cover 8 are mounted between the translating part 4 and the cylinder bore 2a to form a sealing mechanism.

In some embodiments, the cup-shaped rotating part 3 and the translating part 4 may be integrally molded using processes such as casting, cold extrusion, and the like.

The ball screw assembly of the present disclosure replaces the piston in the prior art, realizing the integration of sealing and anti-rotation functions, which can simplify the transmission structure and reduce the number of parts.

The volume-reduced brake caliper of the present disclosure can reduce caliper axial dimensions.

The problems with the anti-rotation mechanism 6 in the prior art are: (1) the need to ensure both anti-rotation and sealing strokes result in a large axial size of the piston, an increase in the overall length of the brake caliper, and difficulties in spatial arrangement; (2) to reduce the axial dimension, it is necessary to design the brake caliper body into a split type, which is complicated in structure and difficult to process.

In the present disclosure, an annular groove is provided at the end of the rotating part 3, which can be used for mounting a bearing 9, reducing the installation height of the bearing 9. An anti-rotation boss 4a is provided on the outer wall surface of the translating part 4, and an anti-rotation groove 2b is machined on the inner wall of the cylinder bore 2a, and the anti-rotation boss 4a fits the anti-rotation groove 2b to limit rotation of the translating part 4. The length of the anti-rotation groove 2b can be directly consistent with the length of the cylinder bore 2a, and the length directions of the anti-rotation groove 2b and the anti-rotation boss 4a are parallel to the axis of the cylinder bore 2a. The difference in length between the anti-rotation groove 2b and the anti-rotation boss 4a should be greater than the total axial displacement of the translating part 4 during its life cycle to ensure that the translating part 4 will always be limited in rotation.

In the present disclosure, a brake caliper body of a one-piece structure is used. The end of the cylinder bore 2a is machined with a first annular groove 2c, the ring 7 is installed in the first annular groove 2c, and the anti-rotation groove 2b and the first annular groove 2c are perpendicular to each other. The maximum distance of the anti-rotation groove 2b from the axis of the cylinder bore 2a is less than the minimum radius of the first annular groove 2c to ensure that after the installation of the ring 7, the outer wall of the ring 7 can be tightly adhered to the first annular groove 2c. Secondly, the outer wall of the translating part 4 is similar to a bare shaft except for the anti-rotation boss 4a and the first annular groove 2c, and the inner wall of the ring 7 is able to fit tightly with the outer wall of the translating part 4, thus ensuring a sealing during its life cycle.

With the above structure, by arranging the stroke for anti-rotation overlapping the stroke for sealing, and by arranging the bearing 9 overlapping the rotating part 3 in the axial direction, it is possible to ensure the sealing and anti-rotation function in the full stroke, and at the same time to reduce the axial dimension of the translating part 4.

The present disclosure will be further described below regarding specific embodiments.

As shown in FIGs. 1 to 3, the present embodiment provides a volume-reduced brake caliper including an actuator 1, an inner brake pad 10, an outer brake pad 12, a brake caliper body 2, a motion conversion mechanism 5, and an anti-rotation mechanism 6. The motion conversion mechanism 5 includes a rotating part 3 and a translating part 4. The anti-rotation mechanism 6 includes an anti-rotation boss 4a provided on an outer wall of the translating part 4 and an anti-rotation groove 2b provided in an inner wall of a cylinder bore 2a of the brake caliper body 2. The anti-rotation groove 2b fits the anti-rotation boss 4a to limit the rotation of the translating part 4. The translating part 4 and the rotating part 3 form a ball screw assembly. The translating part 4 moves linearly in the axial direction, the rotating part 3 moves rotationally, and the translating part 4 and the rotating part 3 are disposed within the cylinder bore 2a of the brake caliper body 2. The inner brake pad 10 and the outer brake pad 12 are disposed on opposite sides of the brake disc 11, and the translating part 4 is used to push the inner brake pad 10 towards the brake disc 11 during braking.

As shown in FIG. 1, the actuator 1 is provided on the brake caliper body 2, and the actuator 1 is used to drive the rotating part 3 to rotate. The actuator 1 includes at least a motor and a reduction mechanism.

As shown in FIG. 1, the brake caliper body 2 is a one-piece structure, the brake caliper body 2 includes a cylinder bore 2a, and the sidewall of the cylinder bore 2a is machined with a circular arc-shaped anti-rotation groove 2b. The axial cross-sectional shape of the cylinder bore 2a resembles a horn, the diameter of the cylinder bore 2a decreases in the direction toward the actuator 1, and the diameter of the cylinder bore 2a enlarges in the direction toward the brake pads. The end of the cylinder bore 2a is machined with a first annular groove 2c, and a ring 7 is mounted in the first annular groove 2c. The radius of the first annular groove 2c is greater than a maximum distance of the anti-rotation groove 2b from the axis of the cylinder bore 2a.

As shown in FIG. 1, the motion conversion mechanism 5 includes at least a rotating part 3 and a translating part 4. In the present embodiments, the motion conversion mechanism 5 adopts a ball screw assembly. The rotating part 3 is a screw shaft, the translating part 4 is a piston, the inner wall of the translating part 4 has a threaded raceway, and the translating part 4 and the rotating part 3 form a ball screw assembly. In the present embodiments, the translating part 4 is cup-shaped, one end of the translating part 4 is open and the other end is closed, and the cross-section of the translating part 4 is U-shaped. A limiting mechanism is disposed between the rotating part 3 and the translating part 4. The limiting mechanism includes a pair of mutually matched limiting bosses, which include a first limiting boss 3a and a second limiting boss 4b. The first limiting boss 3a is disposed at the end of the rotating part 3 that is far away from the actuator 1, and the second limiting boss 4b is disposed in the inner hole of the translating part 4 and close to the closed end of the translating part 4. The position where the first limiting boss 3a and the second limiting boss 4b are in contact with each other is the zero position of the translating part 4 relative to the rotating part 3, at which point the brake caliper cannot generate braking force.

As shown in FIG. 1, the output shaft of the actuator 1 is directly connected to the rotating part 3 to transmit torque and speed. The bearing 9 is mounted between the rotating part 3 and the bottom of the cylinder bore 2a of the brake caliper body. In some embodiments, the bearing 9 is a thrust needle roller bearing. One end of the rotating part 3 is provided with a third annular groove, which is disposed at the end of the rotating part 3 near the bottom of the cylinder bore 2a, and the bearing 9 may be mounted in the third annular groove, which may reduce the overall axial height of the caliper. The outer wall of the translating part 4 fits directly with the inner wall of the cylinder bore 2a of the brake caliper body 2. The translating part 4 is equivalent to a piston.

The anti-rotation mechanism 6, serves to limit the rotation of the translating part 4 during the full stroke of the translating movement of the piston. As shown in FIGs. 1 to 3, the anti-rotation mechanism 6 includes an anti-rotation boss 4a and an anti-rotation groove 2b that fit each other. The anti-rotation boss 4a is provided on an outer wall of the translating part 4, the anti-rotation boss 4a is close to an open end of the translating part 4. The anti-rotation groove 2b is provided on the inner wall of the cylinder bore 2a of the brake caliper body. The anti-rotation groove 2b has a shape of a circular arc. In some embodiments, the length of the anti-rotation groove 2b may be the same as the length of the cylinder bore 2a. The difference between the length of the anti-rotation groove 2b and that of the anti-rotation boss 4a, i.e. the total length of the translating part 4 that is restricted from rotation, needs to be greater than the total axial stroke of the translating part 4 during its life cycle. The number of anti-rotation mechanisms 6 is at least one.

The anti-rotation boss 4a is machined and molded integrally with the translating part 4. In some embodiments, the anti-rotation boss 4a may be mounted on the translating part 4 by fixing methods, such as press-fitting, welding, etc.

The anti-rotation groove 4b is held in the cylinder bore of the brake caliper body 2, and can also be formed by machining or by casting. While in machining, a cut can be made at the flange of the brake caliper body, and when machining is complete, a steel ball can be pressed into the flange bore to form a seal.

As shown in FIG. 1, the sealing mechanism serves to ensure the sealing between the translating part 4 and the brake caliper body 2 during the total axial stroke of the piston. The sealing mechanism includes at least one ring 7 and a dust cover 8. The ring 7 and the dust cover 8 are socketed to the translating part 4. In the axial direction of the cylinder bore 2a, the ring 7 is disposed between the dust cover 8 and the anti-rotation groove 2b. One end of the cylinder bore 2a is machined with a first annular groove 2c. The anti-rotation groove 2b and the first annular groove 2c are perpendicular to each other. The maximum distance of the anti-rotation groove 2b from the axis of the cylinder bore 2a is smaller than the minimum radius of the first annular groove 2c. The ring 7 is mounted inside the first annular groove 2c, and the outer wall of the ring 7 can be tightly adhered to the first annular groove 2c. The width of the ring 7 is greater than the width of the anti-rotation groove 2b, and the inner wall of the ring 7 fits closely to the outer wall of the translating part 4. In the present embodiment, both the ring 7 and the dust cover 8 have a metal skeleton. The ring 7 is interference press-fit in the first annular groove 2c, which can simplify the structure of the annular groove.

The number of rings 7 is at least one. When two rings 7 are installed or when the ring 7 is relatively wide, that is, when its axial dimension is relatively large, it can have a good positioning and guiding effect on the translating part 4.

The present disclosure is exemplarily described above in conjunction with the accompanying drawings. The specific realization of the present disclosure is not limited by the manner described above. As long as various non-substantive improvements are made using the methodological concepts and technical solutions of the present disclosure, or if the above concept and technical solution of the present disclosure are directly applied to other occasions without improvement, they are all within the scope of protection of the present disclosure.

## Claims

1. A volume-reduced brake caliper, comprising a brake caliper body, a motion conversion mechanism, and an anti-rotation mechanism,
wherein the motion conversion mechanism comprises a rotating part and a translating part,
wherein the anti-rotation mechanism comprises an anti-rotation boss set on an outer wall of the translating part and an anti-rotation groove set on an inner wall of a cylinder bore of the brake caliper body, wherein the anti-rotation groove fits the anti-rotation boss to limit a rotation of the translating part.

2. The volume-reduced brake caliper of claim 1, wherein a first end of the translating part is provided with an opening for the rotating part to pass through,
wherein the anti-rotation boss is provided on the outer wall of the translating part at a position close to the opening.

3. The volume-reduced brake caliper of claim 1, wherein the translating part is cup-shaped, a first end of the translating part is open and a second end is closed, and the translating part has a U-shaped cross-section.

4. The volume-reduced brake caliper of any one of claims 1 to 3, wherein a cup-shaped bottom and a cup-shaped outer wall of the rotating part and/or translating part are made in one piece.

5. The volume-reduced brake caliper of any one of claims 1 to 3, wherein a cup-shaped bottom and a cup-shaped outer wall of the rotating part and/or translating part are joined together by welding, riveting or threaded connection.

6. The volume-reduced brake caliper of any one of claims 1 to 3, wherein the cylinder bore is provided with a first annular groove, wherein a ring is provided in the first annular groove.

7. The volume-reduced brake caliper of claim 6, wherein at least one ring is provided.

8. The volume-reduced brake caliper of claim 6, wherein the anti-rotation groove is a circular arc-shaped groove, wherein a maximum distance of the anti-rotation groove from an axis of the cylinder bore is less than a minimum radius of the first annular groove.

9. The volume-reduced brake caliper of claim 6, further comprising a dust cover, wherein the dust cover is disposed between the brake caliper body and the translating part.

10. The volume-reduced brake caliper of claim 9, wherein the ring and the dust cover are sleeved around the translating part to form a sealing mechanism, with the ring positioned between the dust cover and the anti-rotation groove in an axial direction of the cylinder bore.

11. The volume-reduced brake caliper of any one of claims 1 to 10, wherein a limiting mechanism is provided between the rotating part and the translating part, and the limiting mechanism includes a pair of mutually matched limiting bosses.

12. The volume-reduced brake caliper of claim 11, wherein the pair of mutually matched limiting bosses comprises a first limiting boss and a second limiting boss, wherein the first limiting boss is disposed at an end of the rotating part away from the actuator, and the second limiting boss is disposed in an inner bore of the translating part and close to a closed end of the translating part, the first limiting boss and the second limiting boss are in contact with each other at a position which is the zero position of the translating part with respect to the rotating part, at which point the brake caliper cannot generate braking force.

13. The volume-reduced brake caliper of claim 1, wherein a bearing is mounted between the rotating part and a bottom of the cylinder bore.

14. The volume-reduced brake caliper of claim 13, wherein the rotating part is provided with a third annular groove at an end of the rotating part, wherein the third annular groove is disposed at an end of the rotating part near a bottom of the cylinder bore, and the bearing is mounted in the third annular groove.

15. The volume-reduced brake caliper of claim 1, wherein the translating part and the rotating part form a ball screw assembly, wherein the translating part is configured for linear movement in an axial direction, the rotating part is configured for rotational movement, and the translating part and the rotating part are disposed within the cylinder bore of the brake caliper body.

16. The volume-reduced brake caliper of claim 15, wherein the rotating part is a screw shaft, the translating part is a piston, and the inner wall of the translating part has a threaded raceway to form the ball screw assembly with the rotating part.

17. The volume-reduced brake caliper of claim 1, wherein the brake caliper body is of one-piece construction.

18. The volume-reduced brake caliper of claim 1, wherein an axial cross-section of the cylinder bore is horn-shaped.

19. The volume-reduced brake caliper of claim 1, wherein the volume-reduced brake caliper further comprises an actuator, an inner brake pad, a brake disc, and an outer brake pad, wherein the actuator is configured to drive the rotating part to rotate, the inner and the outer brake pads are disposed on opposite sides of the brake disc, and the translating part is configured to push the inner pad towards the brake disc during braking.

20. The volume-reduced brake caliper of claim 19, wherein the actuator comprises at least a motor and a reduction mechanism, wherein an output shaft of the actuator is directly connected to the rotating part.
